# EUROPÄISCHE PATENTSCHRIFT

(11) **EP 0 677 372 B1**
(45) Veröffentlichungstag und Bekanntmachung des Hinweises auf die Patenterteilung: **16.08.2001**
(21) Anmeldenummer: 95103577.3
(22) Anmeldetag: 13.03.1995
(51) Int. Cl.: B29C 55/06

(54) **Längsreckmaschine, insbesondere für thermoplastische Folien**
Longitudinal stretching device, especially for thermoplastic films
Appareil d'étirage longitudinal, spécialement pour feuilles thermoplastiques

(30) Priorität: 15.04.1994 DE 4413162
(43) Veröffentlichungstag der Anmeldung: 18.10.1995
(73) Patentinhaber: LINDAUER DORNIER GESELLSCHAFT M.B.H, 88129 Lindau (DE)
(72) Erfinder: Rutz, Andreas, Dr. Ing., D-88131 Lindau (DE); Müller, Adolf, D-88138 Weissensberg (DE)

(56) Entgegenhaltungen:
- CH-A- 456 933
- DE-A- 2 635 585

## Beschreibung

Die Erfindung betrifft eine Längsreckmaschine, insbesondere für thermoplastische Folien, mit einer vorzugsweise im Einlauf der Längsreckmaschine angeordneten Anpreßwalze.

Bekannte Längsreckmaschinen zum Längsrecken thermoplastischer Folien bestehen aus mehreren achsparallel hintereinander angeordneten Reckwalzen, die in Lagerplatten der Längsreckmaschine drehend gelagert sind. Die eingangsseitig der Längsreckmaschine angeordnete Reckwalze arbeitet mit einer Anpreßwalze zusammen, die in einer zu beiden Seiten der Reckwalze schwenkbar angeordneten Halterung drehend gelagert ist und wobei eine Kolben-Zylindereinheit die Anpreßwalze an die eingangsseitige Reckwalze anlegt oder von dieser abhebt, siehe auch GB-Patent 967,127.

Anpreßwalzen sind Hilfseinrichtungen, die z.B. in Folien-Längsreckmaschinen mit den Reckwalzen zusammenwirken, um die Folie auf diese Walzen aufzupressen. Diese Anpreßwalzen sollen, je nach Anordnung, im wesentlichen folgende Funktionen erfüllen:
a) Abquetschen der Folie, so daß kein Luftpolster (Luftblasen) zwischen der Folie und der Reckwalze vorhanden ist.
b) Andrücken der Folie an die Reckwalze zur Erhöhung der übertragbaren Folienreckkräfte.
c) Verhindern eines sogenannten Folieneinspringens, vorzugsweise im Bereich der ausgangsseitigen Reckwalze.

Je nachdem welche Funktion die Anpreßwalze zu erfüllen hat, muß diese eine bestimmte Position in Bezug auf die Reckwalze am Einlauf und/oder Auslauf der Längsreckmaschine einnehmen. Zum Beispiel beim Abquetschen der Folie, um Lufteinschlüsse zwischen der Reckwalze und der Folie zu vermeiden, muß die Anpreßwalze direkt am Einlauf der Folie auf die Reckwalze aufsetzen.

Die Erhöhung der übertragbaren Reckkräfte auf die Folie wird ganz allgemein durch Anpressen der Folie auf die Reckwalze erreicht. Damit wird die im Normalfall erreichbare Umschlingungsreibung erhöht.
Die Optimalposition der Anpreßwalze zur Reckwalze ist dann gegeben, wenn die Anpreßwalze möglichst nahe am Einlauf der Folie auf die Reckwalze wirkt.

Zur Vermeidung des Einspringens der Folie im Bereich des Reckspaltes am Auslauf der Längsreckmaschine kann auch hier eine Anpreßwalze auf die Reckwalze wirken. Ohne einer entsprechenden Anpreßwalze würde sich, je nach Reibwert zwischen Folie und Reckwalze, ein beim Recken entstehender "Folieneinsprung" von den Randbereichen der Walze über deren Oberfläche in Richtung Walzenmitte ergeben.
Durch Aufbringen einer entsprechenden Anpreßkraft auf die ausgangsseitig der Längsreckmaschine gelegenen Reckwalze wird das Einspringen der gereckten Folie im Auslauf der Längsreckmaschine verhindert.

Zur Erfüllung der vorgenannten Funktionen der Anpreßwalzen ist es erforderlich, daß jede der Anpreßwalzen am Ein- und/oder Auslauf der Längsreckmaschine auf einen optimal gelegenen tangentialen Berührungspunkt an der Reckwalze einstellbar ist. Dies zu erreichen ist Aufgabe der erfindungsgemäßen Lösung.

Erfindungsgemäß wird die Aufgabe durch die Merkmale der Patentansprüche 1 und 3 gelöst.

Danach besteht die erfindungsgemäße Lösung zum einen darin, daß ein schwenkbar gelagertes Stützenpaar folieneingangs- und/oder -ausgangsseitig der Längsreckmaschine eine drehend gelagerte Anpreßwalze trägt und das Stützenpaar zusammen mit der Anpreßwalze auf einem um die Mittenachse der eingangsseitig oder ausgangsseitig in der Längsreckmaschine angeordneten Reckwalze festlegbaren Drehwinkel-Bereich schwenkbar und in wenigstens einer ersten und einer zweiten Endposition oder in dazwischen liegenden Positionen arretierbar ist.
Die gemeinsame Schwenkbewegung des Stützenpaares mit der Anpreßwalze erfolgt durch ein erstes und ein zweites hebelartig ausgebildetes Bauteil, das an dem Stützenpaar angreift, welches um die Mittenachse der ein- und/oder ausgangsseitig der Längsreckmaschine angeordneten Reckwalze schwenkbar gelagert ist und mit einem Drehantrieb in Wirkverbindung steht.
Eine mit dem Stützenpaar verbundene Kolben-Zylindereinheit, die der Hub- bzw. Schwenkbewegung der Anpreßwalze zum Zwecke des Auflegens und Abhebens der Anpreßwalze von der bzw. an die betreffende Reckwalze dient, ist, ebenso wie das Stützenpaar, um die Mittenachse der betreffenden Reckwalzen schwenkbar angeordnet.

Zum anderen besteht die Erfindung in einer von der vorgenannten Lösung abweichenden Ausbildung.
Die Abweichungen bestehen darin, daß auf das die Anpreßwalze tragende Stützenpaar verzichtet wird.
Die Aufnahme der Anpreßwalze und deren Schwenkbewegung übernimmt eine Einrichtung, die lediglich aus einem ersten und einem zweiten einen einarmigen Hebel ausbildenden Bauteil besteht, welches drehend um die Mittenachse der ein- und/oder ausgangsseitigen Reckwalze gelagert ist.
Jeder der beiden einarmigen Hebel des Bauteils weist eine radial zur Mittenachse der Reckwalze verlaufende Längsführung auf, in der die Anpreßwalze drehend gelagert und achsparallel zur betreffenden Reckwalze verschiebbar ist.
Das Verschieben der Anpreßwalze übernimmt eine jedem Bauteil zugeordnete Kolben-Zylindereinheit, die an der Anpreßwalze angreift.

In weiterer Ausgestaltung beider Lösungsvarianten sind die die Schwenkbewegung der Anpreßwalze ausführenden hebelartig ausgebildeten Bauteile mit einem Stellantrieb verbunden, der die Anpreßwalze innerhalb eines gewünschten Drehwinkel-Bereichs um die betreffende Reckwalze positioniert. Als vorteilhaft erweist sich dabei, wenn der Drehwinkel-Bereich wenigstens 90 Drehwinkelgrade beträgt.

Mit den erfindungsgemäßen Mitteln zur Positionierung der Anpreßwalze gegenüber der ein- und/oder ausgangsseitig angeordneten Reckwalze wird erreicht, entsprechend der gewünschten Funktion der Anpreßwalze während des Folienreckens, die Anpreßwalze innerhalb eines festgelegten Schwenkbereiches um die Reckwalze zu positionieren und mit der betreffenden Reckwalze in Wirkverbindung zu bringen.
Die aus dem Stand der Technik bekannten nachteiligen Wirkungen beim Folienrecken werden damit vollständig vermieden.

Die Erfindung wird im folgenden anhand der Zeichnungen näher erläutert. In den Zeichnungen zeigen:
- Figur 1: eine schematische Darstellung einer Dreiwalzen-Längsreckmaschine mit Mitteln zur Positionierung der Anpreßwalze;
- Figur 2: einen Schnitt durch die Mittel zur Aufnahme und Verstellung der Anpreßwalze gemäß Linie B-B nach Figur 1;
- Figur 3: einen Schnitt durch die Verstellmittel gemäß Linie C-C nach Figur 1;
- Figur 4: die Anpreßwalze in einer Längsführung des positionierbaren Bauteils aufgenommen.

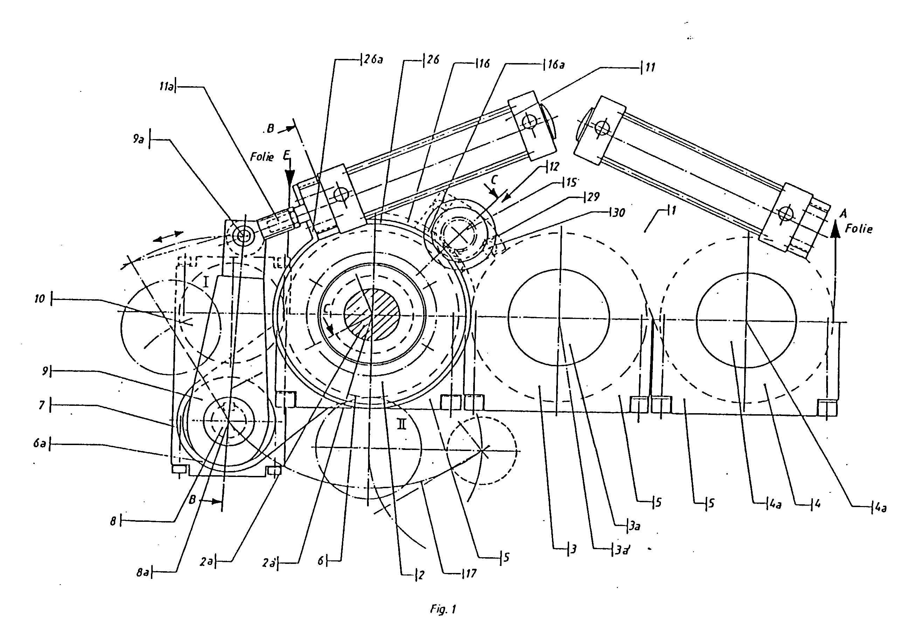

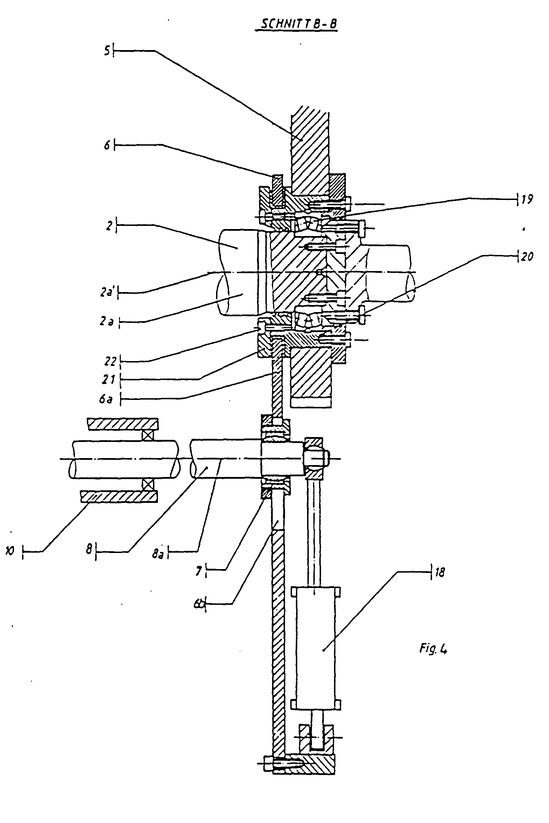

In der schematisch dargestellten Längsreckmaschine 1 gemäß Figur 1 sind die Walzenzapfen 2a,3a,4a der drei Reckwalzen 2,3,4 in der jeweiligen Lagerplatte 5 drehend gelagert.
Der Folieneinlauf ist mit "E" und der Folienauslauf "A" bezeichnet.
Der Walzenzapfen 2a trägt auf jedem seiner freien Enden ein schwenkbar um dessen Mittenachse 2a' angeordnetes Bauteil 6, welches einen einarmigen Hebel 6a ausbildet.
Am freien Ende des Hebels 6a ist in diesem ein Lager 7 integriert, in welchem eine Welle 8, die über die Arbeitsbreite der Reckwalze 2 reicht, drehbar aufgenommen ist.
An den freien Enden der Welle 8 greift drehfest eine Stütze 9 an, die ebenfalls als einarmiger Hebel ausgebildet ist. Die beiden Stützen 9, wovon nur die rechtsseitige Stütze dargestellt ist, bilden ein Stützenpaar.
Die beiden Stützen nehmen beabstandet von ihrem freien Ende die drehend gelagerte Anpreßwalze 10 auf. Das freie Ende jeder Stütze 9 ist mit der Kolbenstange 11a der Kolben-Zylindereinheit 11 in dem Anlenkpunkt 9a verbunden. Die zu beiden Seiten ein- und/oder ausgangsseitig der Längsreckmaschine 1 angeordneten Kolben-Zylindereinheiten 11 sind gemeinsam mit den Bauteilen 6 um die Mittenachse 2a' in einem festgelegten Schwenkwinkel-Bereich gemäß der Linie 17, der wenigstens 90 Drehwinkelgrade zwischen einer ersten und einer zweiten Endstellung I,II entspricht, schwenkbar gelagert.
Details dieser Anordnung werden in Figur 3 dargestellt.

Die Positionierung der Anpreßwalze 10 in der ersten und der zweiten Endstellung I bzw. II, oder in möglichen zwischen der ersten und zweiten Endstellungen liegenden Positionen, erfolgt mittels eines Stellantriebes 12, z.B. mittels eines mit Handrad 13 betätigbaren getrieblichen Mittels 14,15,16.

Das getriebliche Mittel besteht, wie Figur 3 zeigt, aus einer drehbar in der ersten Lagerplatte 5 angeordneten Welle 14, die ein Ritzel 15 trägt und die z.B. von dem Handrad 13 angetrieben ist und aus einem am Bauteil 6 vorhandenen Teilzahnkranz 16.

Das Ritzel 15 greift in die Zähne 16a des mit dem Bauteil 6 verbundenen Abschnittes des Zahnkranzes 16 ein.
Durch Verdrehen des Handrades 13 kann somit das Bauteil 6, das die Anpreßwalze 10 tragende Stützenpaar 9 und die daran angreifende Kolben-Zylindereinheit 11 und die Anpreßwalze 10 aus der ersten Endposition I in die zweite Endposition II verstellen. Die Anpreßwalze 10 beschreibt dabei einen Verstellweg, der der in Figur 1 gezeigten strichpunktierten Linie 17 entspricht.

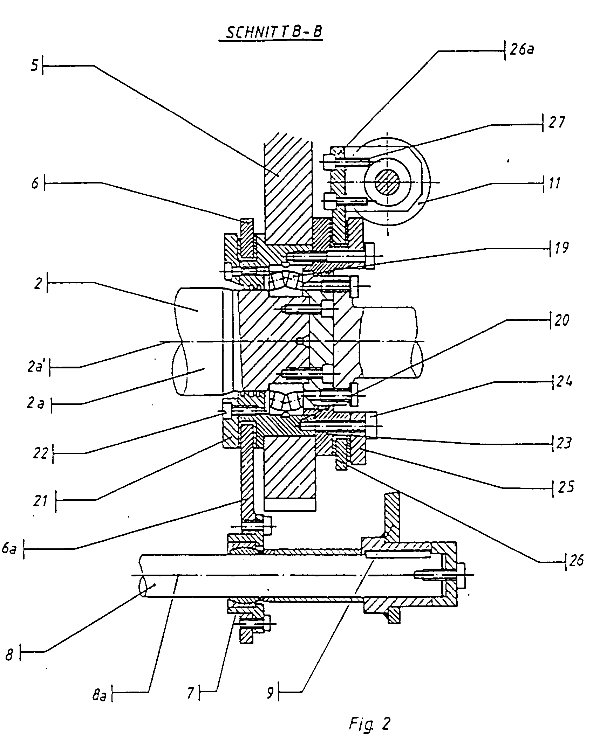

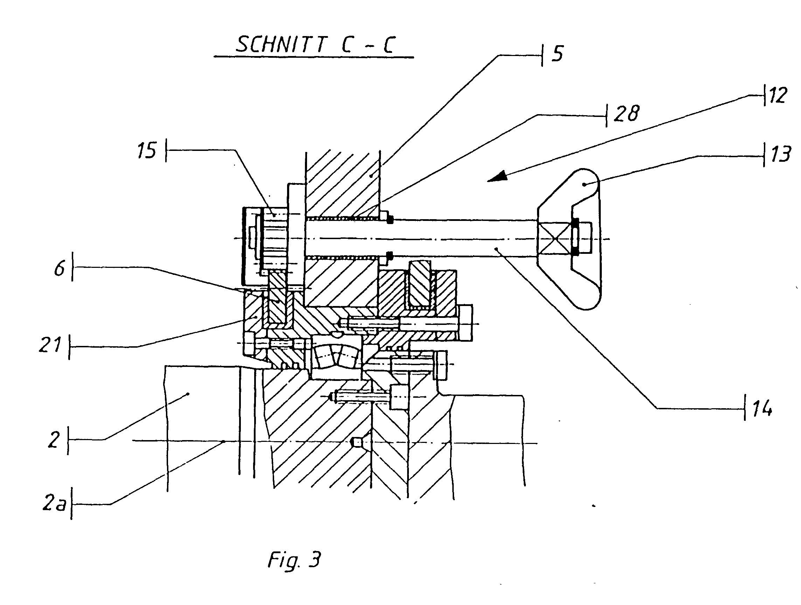

Eine kostensparende Ausbildung der Erfindung wird, wie Figur 4 zeigt, dadurch erreicht, wenn der einarmige Hebel 6a eine radial verlaufende Längsführung 6b aufweist, in welcher die Anpreßwalze 10 drehend gelagert ist und mittels einer Kolben-Zylindereinheit 18 an die Reckwalze 2 anlegbar und von ihr abhebbar ist.
Mit dieser Ausbildung können die Welle 8 und das die Anpreßwalze 10 aufnehmende Stützenpaar 9 gemäß Figur 1 und 2 entfallen.
Die Anpreßkraft wird in diesem Falle von der Kolben-Zylindereinheit 18 aufgebracht, die als eine Kurzhub-Kolben-Zylindereinheit ausgebildet ist. Diese Kolben-Zylindereinheit ist so mit dem Bauteil 6 verbunden, daß die Anpreßwalze 10 radial in Richtung der Reckwalze 2 verschiebbar ist.

Figur 2 zeigt die rechte Seite des um die Mittenachse 2a' der Reckwalze 2 schwenkbar gelagerten Bauteil 6,6a in Verbund mit der Kolben-Zylindereinheit 11.
Das freie Ende des Walzen-Zapfens 2a der Reckwalze 2 ist in einem Lager 19 der Lagerplatte 5 drehend aufgenommen.
Zwischen der Lagerplatte 5 und dem den Walzen-Zapfen 2a der Reckwalze 2 aufnehmenden Rollenlager 19 ist ein rotationssymmetrisches büchsenartig ausgebildetes Verbindungselement 20 eingeordnet. Das Verbindungselement 20 trägt auf der in das Maschineninnere gerichteten Seite der Lagerplatte 5 das Bauteil 6 und den Teil-Zahnkranz 16.
Über Schrauben 22 ist mittels einer Klemmscheibe 21 das Bauteil 6,6a mit dem Verbindungselement 20 formschlüssig verbunden.
Auf der gegenüberliegenden Seite der Lagerplatte 5 ist ein rotationssymmetrisches Zwischenstück 23 vorhanden, das über Schraubenverbindungen 24 unter Einbindung einer Klemmscheibe 25 mit dem Verbindungselement 20 verbunden ist.
Ein Halter 26 ist auf das Zwischenstück 23 aufgesetzt und mit der Klemmscheibe 25 formschlüssig verbunden.
Der Halter 26 besitzt einen radial nach außen gerichteten Steg 26a, mit dem über Schrauben 27 die Kolben-Zylindereinheit 11 verbunden ist.

Am freien Ende des einarmigen Hebels 6a des Bauteils 6 ist in dem Lager 7 die Welle 8 drehbeweglich aufgenommen. An jedem freien Ende der Welle 8 ist drehfest die Stütze 9 aufgesetzt, an deren der Wellenverbindung gegenüberliegenden Ende die Kolbenstange 11a der Kolben-Zylindereinheit 11 angreift, wie Figur 1 deutlich zeigt.

In Figur 3 ist der Stellantrieb 12 zur gemeinsamen Verstellung der in Figur 1 und 2 dargestellten Bauteile 6 mit dem einarmigen Hebel 6a und der Kolben-Zylindereinheit 11 gezeigt. Die Welle 14 des Stellantriebs 12 durchgreift oberhalb der Mittenachse 2a' der Reckwalze 2 die Lagerplatte 5 in einer Bohrung 28.
An einem Wellenende ist ein Antriebsmittel, z.B. das Handrad 13 befestigt. Das andere Ende trägt drehfest ein Ritzel 15, das mit den Zähnen 16a des Teil-Zahnkranzes 16 des Bauteils 6 kämmt, siehe auch Figur 1.

Die Befestigung des Bauteils 6 wird in Figur 2 deutlicher dargestellt als in Figur 3.
Durch Drehen der Welle 14 wird das Bauteil 6,6a und der Halter 26 mit Steg 26a, siehe auch Figur 2, gemeinsam um die Mittenachse 2a der Reckwalze 2 gedreht. Damit gelangt die Anpreßwalze 10 aus der ersten Endlage I, z.B. in die zweite Endlage II.

Durch im einzeln nicht dargestellte arretierende Mittel, z.B. einen Klemmbock 29 mit Schrauben 30 (Figur 1), kann das Bauteil 6,6a und der Halter 26 mit Steg 26a nach dem Verstellen gegen Verdrehung gesichert werden.

## Patentansprüche

1. Längsreckmaschine, insbesondere für thermoplastische Folien, bestehend aus mehreren achsparallel hintereinander in der Längsreckmaschine angeordneten und drehend gelagerten Reckwalzen (2,3,4) aus einer drehend gelagerten Anpreßwalze (10), die von einem Stützenpaar (9) getragen ist, das schwenkbar um die Drehachse einer parallel zur Mittenachse der ein- und/oder ausgangsseitigen Reckwalze verlaufenden Welle gelagert ist, und das Stützenpaar (9) drehfest mit der drehend gelagerten Welle verbunden ist, und bestehend aus wenigstens einer Kolben-Zylindereinheit (11), die an dem Stützenpaar angereift und mittels der Kolben-Zylindereinheit die Anpreßwalze (2,4) tangential an die eingangs- und/oder ausgangsseitige Reckwalze anlegbar und von dieser abhebbar ist, **dadurch gekennzeichnet**, daß das schwenkbar gelagerte Stützenpaar (9) zusammen mit der Anpreßwalze (10) auf einem um die Mittenachse (2a',4a') der Reckwalze (2,4) festlegbaren Drehwinkelbereich gemäß einer Linie (17) schwenkbar und in wenigstens einer ersten und einer zweiten Endposition I oder II arretierbar ist.

2. Längsreckmaschine nach Anspruch 1, **dadurch gekennzeichnet**, daß die Welle (8) zwischen einem ersten und einem zweiten hebelartig ausgebildeten Bauteil (6) angeordnet und von diesem aufgenommen ist, und welche Bauteile (6) in dem festlegbaren Drehwinkelbereich gemäß der Linie (17) um die Mittenachse (2a',4a') der Reckwalze (2,4) schwenkbar gelagert sind.

3. Längsreckmaschine, bestehend aus einzelnen achsparallel hintereinander in der Längsreckmaschine angeordneten und drehend gelagerten Reckwalzen (2,3,4) und aus einer eine drehend gelagerte Anpreßwalze (10) aufnehmenden Einrichtung, mittels der die Anpreßwalze tangential an die ein- und/oder ausgangsseitige Reckwalze anlegbar und von dieser abhebbar ist, **dadurch gekennzeichnet**, daß die Einrichtung aus einem ersten und einem zweiten die Anpreßwalze (10) tragenden und einen einarmigen Hebel (6a) ausbildenden Bauteil (6) besteht, welches Bauteil (6) drehend um die Mittenachse (2a',4a') der ein- und/oder ausgangsseitigen Reckwalze (2,4) gelagert ist, daß jeder der einarmigen Hebel (6a) des Bauteils (6) eine radial zur Mittenachse (2a',4a') der Reckwalzen (2,4) verlaufende Längsführung (6b) aufweist, in der die Anpreßwalze (10) drehend gelagert und achsparallel zu der Reckwalze (2,4) verschiebbar ist und daß eine jedem Bauteil (6) zugeordnete Kolben-Zylindereinheit (18) mit der Anpreßwalze (10) verbunden ist.

4. Längsreckmaschine nach Anspruch 1 und 3, **dadurch gekennzeichnet**, daß die Bauteile (6) zur Positionierung der Anpreßwalze (10) im Drehwinkelbereich gemäß Linie (17) mit einem Stellantrieb (12) in Verbindung stehen.

5. Längsreckmaschine nach Anspruch 1 und 3, **dadurch gekennzeichnet**, daß die Anpreßwalze (10) auf Positionen innerhalb eines Schwenkbereiches gemäß Linie (17) von wenigstens 90 Drehwinkelgraden um die Mittenachse (2a',4a') der Reckwalze (2,4) einstellbar ist.

## Claims

1. Longitudinal stretching apparatus, especially for thermoplastic films, comprising a plurality of stretching rollers (2, 3, 4) arranged in succession with parallel axes and mounted rotatably in the longitudinal stretching apparatus, a rotatably-mounted pressure roller (10) which is supported by a pair of supports (9) mounted for swivelling about the axis of rotation of a shaft extending parallel to the central axis of the input-side stretching roller and/or the output-side stretching roller, the pair of supports (9) being fixed for rotation with the rotatably mounted shaft, and comprising at least one piston-cylinder unit (11) which engages the pair of supports, the pressure roller (2, 4) being capable of being placed tangentially against the input-side stretching roller and/or the output-side stretching roller and removed therefrom by means of the piston-cylinder unit, characterized in that the swivellably-mounted pair of supports (9) can swivel, together with the pressure roller (10), through a definable swing-angle range about the central axis (2a', 4a') of the stretching roller (2, 4) in accordance with a line (17), and can be locked in at least a first end position and a second end position I or II.

2. Longitudinal stretching apparatus according to Claim 1, characterized in that the shaft (8) is disposed between a first component and a second component (6), which are formed in the manner of a lever, and is held thereby, the components (6) being mounted for swivelling about the central axis (2a', 4a') of the stretching roller (2, 4) in the definable swing-angle range in accordance with the line (17).

3. Longitudinal stretching apparatus comprising individual stretching rollers (2, 3, 4) arranged in succession with parallel axes and mounted rotatably in the longitudinal stretching apparatus and a device holding a rotatably-mounted pressure roller (10) by means of which device the pressure roller can be placed tangentially against the input-side stretching roller and/or the output-side stretching roller and removed therefrom, characterized in that the device comprises a first component and a second component (6) supporting the pressure roller (10) and each forming a single-armed lever (6a), the components (6) being mounted for rotating about the central axis (2a', 4a') of the input-side stretching roller and/or the output-side stretching roller (2, 4), in that each of the single-armed levers (6a) of the components (6) comprises a longitudinal guide (6b) which extends radially relative to the central axis (2a', 4a') of the stretching roller (2, 4) and in which the pressure roller (10) is mounted rotatably and is movable parallel to the axis of the stretching roller (2, 4), and in that a piston-cylinder unit (18) associated with each component (6) is connected to the pressure roller (10).

4. Longitudinal stretching apparatus according to Claims 1 and 3, characterized in that the components (6) are connected to an actuator (12) for the positioning of the pressure roller (10) in the swivel-angle range in accordance with line (17).

5. Longitudinal stretching apparatus according to Claims 1 and 3, characterized in that the pressure roller (10) is adjustable to positions within a swivel range in accordance with line (17) of at least 90 degrees of swivel angle about the central axis (2a', 4a') of the stretching roller (2, 4).

## Revendications

1. Appareil d'étirage longitudinal, spécialement pour feuilles thermoplastiques, comprenant plusieurs cylindres d'étirage (2, 3, 4) disposés de façon parallèle, les uns derrière les autres, dans l'appareil d'étirage longitudinal et logés de façon pivotante, comprenant un cylindre d'appui (10) logé de façon pivotante, qui est supporté par une paire de supports (9), laquelle est montée de manière à pivoter autour de l'axe de rotation d'un arbre s'étendant parallèlement à l'axe central du cylindre d'étirage côté entrée et/ou sortie, et la paire de supports **(9)** étant reliée de manière résistante à la torsion à l'arbre logé de façon pivotante, et comprenant au moins une unité piston-vérin (11), qui est appliquée sur la paire de supports et le cylindre d'appui (2, 4) pouvant être posé au moyen de l'unité piston-vérin de façon tangentielle sur le cylindre d'étirage côté entrée et/ou côté sortie et être soulevé de celui-ci, caractérisé en ce que la paire de supports (9) montée de manière pivotante peut pivoter conjointement avec le cylindre d'appui (10) sur une plage d'angle de rotation qui peut être définie autour de l'axe central (2a', 4a') du cylindre d'étirage (2, 4) selon une ligne (17) et peut être verrouillé dans au moins une première et une deuxième position finale I ou II.

2. Appareil d'étirage longitudinal selon la revendication 1, caractérisé en ce que l'arbre (8) est disposé entre un premier et un deuxième composant (6) conçu en forme de levier et est réceptionné par celui-ci, lesquels composants (6) sont montés de manière à pouvoir pivoter dans la plage d'angle de rotation qui peut être définie selon la ligne (17) autour de l'axe central (2a', 4a') du cylindre d'étirage (2, 4).

3. Appareil d'étirage longitudinal, comprenant des cylindres d'étirage (2, 3, 4) individuels, disposés de façon parallèle à l'axe, les uns derrière les autres, dans l'appareil d'étirage longitudinal et logés de façon pivotante, un dispositif recevant un cylindre d'appui (10) logé de façon pivotante et qui permet de poser le cylindre d'appui de façon tangentielle sur le cylindre d'étirage côté entrée et/ou sortie et de le soulever de celui-ci, caractérisé en ce que le dispositif comprend un premier et un deuxième composant (6) supportant le cylindre d'appui (10) et formant un levier (6a) à un bras, lequel composant (6) est monté de manière à pouvoir pivoter autour de l'axe central (2a', 4a') de l'arbre d'étirage (2, 4) côté entrée et/ou sortie, en ce que chacun des leviers à un bras (6a) du composant (6) présente un guide longitudinal (6b) s'étendant radialement par rapport à l'axe central (2a', 4a') des cylindres d'étirage (2, 4) et dans lequel le cylindre d'appui (10) est monté de manière pivotante et peut coulisser parallèlement à l'axe par rapport au cylindre d'étirage (2, 4) et en ce qu'une unité piston-vérin (18) attribuée à chaque composant (6) est reliée au cylindre d'appui (10).

4. Appareil d'étirage longitudinal selon les revendications 1 et 3, caractérisé en ce que les composants (6) pour le positionnement du cylindre d'appui (10) dans la plage d'angle de rotation selon la ligne (17) sont en contact avec un organe moteur (12).

5. Appareil d'étirage longitudinal selon les revendications 1 et 3, caractérisé en ce que le cylindre d'appui (10) est réglable sur des positions à l'intérieur d'une plage d'angle de basculement selon la ligne (17) d'au moins 90 degrés de rotation autour de l'axe central (2a', 4a') du cylindre d'étirage (2, 4).
